# EUROPEAN PATENT APPLICATION

(11) **EP 1 626 455 A2**
(43) Date of publication of application: **15.02.2006**
(21) Application number: 05254825.2
(22) Date of filing: 02.08.2005
(51) Int. Cl.: H01M 8/24, H01M 8/02

(54) **Mini fuel cell battery with screw-closure system**

(30) Priority: 02.08.2004 ES 200401921
(71) Applicant: CELAYA, EMPARANZA Y GALDOS S.A. (CEGASA), E-01013 Vitoria (Alava) (ES)
(72) Inventor: Rodriguez, Javier, San Sebastian, Guipuzcoa (ES); Uribe-Echeberria, Igor Cantero, San Sebastian, Guipuzcoa (ES); Grande, Hans Jurgen, 20240 Oridicia, Guipuzcoa (ES); Crespo, Oscar, San Sebastian, Guipuzcoa (ES)
(74) Representative: Boden, Keith McMurray

(57) **Abstract**

A mini fuel cell battery comprising at least one battery module, each battery module comprising: a body unit (1); and at least two fuel cell units which are disposed to the body unit (1) and define an anodic space (15) therebetween, wherein each fuel cell unit comprises a pair of collectors (3, 4), a membrane electrode assembly (6) which is disposed between the pair of collectors (3, 4), and a fixing ring (2) which is secured to the body unit (1) by means of a screw-closure system, such as hermetically to seal the respective fuel cell unit to the body unit (1).

## Description

### FIELD OF THE INVENTION

The present invention relates to a mini fuel cell battery with a screw closure system, which enables hermetic sealing of the battery, and avoids the need for other securing systems which are common in the prior state of the art, such as adhesives, nuts, screws and the like.

By means of the characteristics inherent in the design which is the subject of the present invention, it is possible to use structural materials which are conventional, light, economical and easy to mechanize, all in a reduced number of parts, and the design is thus easy to industrialize, unlike most designs proposed in the prior art.

In addition, the mini fuel cell battery of the present invention has a design which can easily be adapted to the voltages and powers required for the required application, and it can easily be configured to operate with hydrogen, methanol or other fuels.

### PRIOR STATE OF THE ART

Fuel cell batteries are being developed as a method for energy generation which can overcome some limitations and disadvantages of the conventional technologies, and for a wide range of applications. Most attention has conventionally been focussed on applications with the greatest strategic and economic implications, such as the field of transport and distributed generation. For the first of these, compared with the conventional technology, fuel cell batteries have the primary advantage of their potential independence from fossil fuels, and the secondary advantage of their modularity and flexibility in adapting to different sizes and power levels, as well as a high level of energy efficiency, particularly if solutions of cogeneration of electricity and residual heat are adopted. Against these advantages, at present, there are some barriers which are delaying the emergence of such batteries on the market, in particular the high price of their essential components, their limited service life, and the problem of selection and distribution of the fuel.

In general, low-power portable applications are the third field of application. Traditionally, less attention has been paid to this field, probably for reasons of lower economic and strategic relevance compared with the first two applications, that is, transport and distributed generation. However, this trend is gradually beginning to change. There are two basic reasons. The first reason is that the reduced relative importance in this field of application of limitations such as the high price of the components, and the relatively short life expectancy of the present systems. For example, a cost of 5000€/kW and a service life of 1000 hours may be unacceptable for transport, but acceptable for an application in the niche of low power and high added value. The second reason is that the progressive introduction onto the market of fuel cell batteries in low-power applications can be very useful for getting the consumer to appreciate the technology, and for opening up distribution channels for the fuels, whether this is methanol, hydrogen or the like, with a view to determining the bases for future sale on a large scale.

There exist various specific fields of application within the context of low power, to which much attention is being paid. In the lowest power range, these applications include the direct supply and as battery chargers for consumer electronic equipment, such as mobile phones, digital notebooks and the like, with a power requirement of between 1 W and 5 W, direct supply for portable computers, typically with a power requirement of from 20 W upwards, the supply of telecommunications systems, with a power requirement of from approximately 10 W upwards, industrial signalling applications, with a power requirement of from a few W upwards, and the field of electronic games. In all of these applications, the main advantage of fuel cell batteries as compared with conventional batteries is their greater capacity for energy storage per unit weight and/or volume, as well as the ability to recharge the fuel instantaneously.

Polymer membrane fuel cell batteries are the reference technology for all such applications, largely because of their capacity to function at relatively low temperatures, typically from approximately 0 °C up to 80 °C and their simplicity, which in some cases makes it possible to dispense with a large number of auxiliary sub-systems which are essential in other types of fuel cell batteries, which give rise to complications and significant cost.

From the technological point of view, most attention is paid to optimization of the active components of the battery, that is, in the development of long-life electrolytic membranes, which are of low price, have good conductivity and are not affected by damp, electro-catalysts which are resistant to pollution by impurities or by-products and utilize little or no noble metals, and electrodes with an optimum formulation and a low electro-catalyst content.

In addition, unlike fuel cell batteries with a conventional polymer membrane, that is, fuel cell batteries for power levels which in general are higher than 50 W, in the case of mini or micro fuel cell batteries, no concept of a standardized structural design exists. Thus, there co-exist numerous design proposals, which attempt to obtain maximum compactness and density of power, and try to provide solutions to the problems of sealing and discharge of the generated by-products, that is, heat and water vapour. In some cases, designs have been proposed which are extremely complex and intrinsically costly to produce, using techniques of lithography on silicon wafers [CEA Grenoble], micro-mechanisation of ceramic materials which include sub-systems for the recovery and re-circulation of water [Motorola], or designs based on printed circuit boards [Journal of Power Sources, 118 (2003), 162-171], in addition to certain fuel cell battery designs with cylindrical, tubular or polygonal shapes [US-A-2003/0186100, US-A-2003/0021890 and US-A-2003/0180600].

In view of this situation, the present applicant has recognized the opportunity to develop concepts which focus on structural simplicity and economy of materials, as opposed to technical complexity, which results in a certain loss of power density, all of this being with the aim of reducing the cost of the structural components of a mini fuel cell battery by not requiring complex manufacturing processes and utilizing low-cost, high-performance structural materials.

### EXPLANATION OF THE INVENTION AND ADVANTAGES

In its preferred embodiment the subject of the present invention is a passive mini fuel cell battery, some of the characteristics of which are maximum modularity and flexibility, simplicity of design, and a reduced number of components, all using economic, low-cost, conventional materials which have a sufficient level of performance, and with a design which guarantees the sealing of the system against undesirable fuel leaks.

The mini fuel cell battery of the present invention can be used for functioning with hydrogen, as obtained from the reforming, hydrolysis or chemical decomposition of hydrides, methanol in aqueous solution, or other fuels, simply by replacing the electrode/electrolytic membrane/electrode assemblies, where commonly referred to as membrane electrode assemblies (MEAs), if appropriate, by others which are more suitable for the fuel used. The mini fuel cell battery which is the subject of the present invention can function with the fuel in static mode, or in dead-end mode as it is commonly referred, or in a continuous flow, according to the particular requirements.

The present invention relates to the fuel cell battery itself, and not to other auxiliary or associated systems, such as the system for storage and metering of the fuel, electronic circuitry for conditioning of the current, or other elements which can optionally form part of the system as a whole. Nor does the present invention relate specifically to the particular characteristics of the electrochemically-active parts of the battery, that is, the MEAs.

A passive fuel cell battery is a fuel cell battery which, in its simplest design, can function without auxiliary elements for control of the temperature or the humidity in its interior, as well as without means for forced supply of fuel or oxidant.

The modularity and flexibility of the mini fuel cell battery which is the subject of the present invention relates to its versatility of design, which makes it possible to obtain an endless range of possibilities regarding the number of elemental cells and the electrode surface area, which in general starts at approximately 1 cm², which in turn makes it possible to construct systems with nominal characteristics of voltage and current as dictated by the particular application in question.

In its preferred embodiment the mini fuel cell battery which is the subject of the present invention is based on a contiguous flat arrangement of elemental cells. There are two basic options for the configuration of the battery.

In one, preferred option, the present invention is based on an elemental module which consists of two unit cells which are disposed symmetrically on both sides of a common anodic compartment, through which the liquid or gaseous fuel is disposed, leaving the outer surface of both cells exposed to the air, which acts as a cathodic oxidant, as will be described in greater detail hereinbelow. In such an embodiment the lateral interconnection of the modules leads to mini fuel cell batteries with an even number of unit cells on both surfaces of the system, thus optimizing the use of the entire surface area available and leading to a relatively high specific power.

In a second option, which is of interest for devices in which it may be difficult for the oxygen in the air to gain access to one of the surfaces of the battery, for example, in applications in which the battery must rest supported on one of its surfaces, the unit cells can be arranged on a single side of the anodic compartment, leaving the other side blind. This option has the advantage of enabling adaptation to certain specific applications, although in general it will lead to lower specific power levels than in the preferred option with cells on both surfaces.

In one embodiment each unit cell consists of an MEA, which in turn is disposed between the two electronic collectors. The basic design of these collectors consists of a thin metal plate, which is less than 1 mm thick and ideally between 0.1 and 0.5 mm, and which permits the flow of electrons to the anodic electrode and from the cathodic electrode of the MEA, respectively. These collectors include perforations which permit access by the reagents and electrochemical reaction products to and from the electrodes. These reagents and products can be in a gaseous phase, for example, hydrogen, a liquid phase, for example, aqueous methanol, or a vapour phase, for example, water vapour. These collectors are sufficiently mechanically rigid, have a high level of surface electrical conductivity and contact, and sufficient chemical inertia in relation to corrosion. Some materials which are suitable for these collectors are stainless steel, optionally covered with a coating to protect against passivation, or nitrided titanium.

In one embodiment the electronic collectors have a circular shape, which is highly advantageous where the electrode surfaces have the same circular shape, for the purpose of optimizing the space available.

In one embodiment the two sets of cathodic collectors, MEAs and anodic collectors are disposed on opposite sides of a hollow central body, thus delimiting the aforementioned anodic compartment. This central body has an intake aperture and generally another, output aperture for the supply of the fuel to the anodic compartment and for the circulation of the fuel, whether this is in liquid or gaseous form.

A significant characteristic of the invention is the method used for fixing the electrode assemblies to the central body by means of a screw-type mechanism.

In one embodiment each electrode assembly is pressed around its perimeter by a ring with a screw thread (where one of a male or female screw thread) on its outer perimeter, which is screwed onto the central body, which has a counterpart screw thread, until the electrode assembly abuts a bracket which delimits the perimeter of the anodic compartment. The pressure which is exerted in succession by the ring on the cathodic collector, the MEA, the anodic collector and the said bracket, makes it possible to obtain adequate sealing at the periphery of the electrode assembly.

In order to optimize the sealing characteristics, especially in critical cases in which it is chosen to supply gaseous fuels at a certain excess pressure relative to the atmosphere, the electrode assemblies can include sealing means for ensuring a seal, in order to prevent the risk of undesirable leakages. For example, it is possible to place a flat seal between the bracket and the anodic collector, or an O-ring which is accommodated in a channel formed, for example, by etching, in the bracket. The present invention does not require any additional sealing means between the cathodic collector and the fixing ring.

In another embodiment the screw-type mechanism can comprise a plurality of inclined inter-engaging flanges, of the type as used to close the compartments for button batteries in small electronic devices, where the relative rotation of the fixing ring to the body causes the fixing ring to be screwed into the body and thus engage the respective electrode assembly, such as sealing to fix the respective electrode assembly to the body.

Simplicity of design, which is one of the characteristics of the present invention, involves the possibility of using economic structural materials for construction of the passive structural components, such as the central body and closure rings. Thus, these components can be mechanized or moulded using conventional plastics, thermoplastics or thermally-stable materials, and by complying simply with some basic requirements of chemical and dimensional stability. Thus, It is possible to use materials such as polyolefins, for example, polyethylene or polypropylene, halogenated plastics, such as polyvinyl chloride and polytetrafluoroethylene, specialized plastics, such as polyamides, aliphatic polyesters, polycarbonate and polyacetals, high-performance or engineering polymer materials, such as polyetherketones, polyamideimides, polysulphones, polyimides, polyetherimides, aromatic polyesters, aromatic polyoxides, thermally stable polymers, such as polybenzimidazole or polyquinoxalines, rigid crystal polymers or other similar materials, as well as their mixture or alloys. The cross-linked thermally-stable materials can include phenolic resins, polyesters, epoxy resins or others, preferably with reinforcement, such as glass fibre. Alternatively, these structural components can be made of specialized ceramic materials.

As mentioned hereinabove, the current collectors have a perforated central area which is permeable to gases and vapours. For optimum configuration of the system, this permeable area should not extend to the entire collector, but only to the area which is in physical contact with the attached electrode. Thus, it is advantageous, but not intrinsically essential, for the peripheral area on which the fixing ring is supported to be without perforations, in order to improve the sealing of the system, particularly in the case of the anodic collector.

Alternatively, instead of a perforated metal plate, it is possible to use other elements as electrical collectors, provided that those elements comply with the basic requirements of mechanical rigidity, in order to avoid buckling with loss of electrical contact between the collectors and the MEA, and have adequate permeability and adequate chemical stability, for the purpose of maintaining a high level of electrical conductivity. Thus, for example, it is possible to use metal mesh, rigid open-cell metal foams, sheets of a rigid polymeric material, such as composites or engineering polymers, electrically-conductive ceramics, either at the surface, for example, as achieved by surface metallization, or in the mass, for example, by filling with carbon black, metal particles, or electrically-conductive polymers.

In view of the intrinsic characteristics of fuel cell batteries, which give rise to actual cell voltages which in general are too low to be used directly in practical applications (generally less than 1 V for hydrogen batteries, and generally less than 0.7 V for methanol fuel batteries), it is advantageous to have a determined number of unit cells connected in series. Thus, in one embodiment the current collectors include means for permitting electrical interconnection of some unit cells with others, either in series or in parallel according to the particular circumstances. In a preferred embodiment this interconnection comprises a flat, lateral flange or tab, which provides the collector with a racquet-type shape, which, via electrical connections outside the body of the actual fuel cell battery, enables the establishment of appropriate contacts. These flanges can be accommodated in a recess provided at the thread of the central body. An alternative option is direct connection of an electric cable in the centre of a circular collector, by means of techniques such as spot, arc, electrical welding or the like. This option has the difficulty that the connection cable of each anodic collector will occupy part of the anodic compartment, and must pass through the central body in order to be able to emerge to the exterior of the battery, where the appropriate connections would be made.

Where using hydrogen as a fuel, for a typical nominal operating voltage of 0.6 V, an elemental module of the type described, with two elemental batteries connected in series, would provide an operating voltage of 1.2 V. These values continue to be relatively low for most practical applications, and in one embodiment more than two unit cells are connected in series in order to obtain higher voltages.

### DRAWINGS AND REFERENCES

To complement the description, and for the purpose of assisting better understanding of the characteristics of the present invention, a preferred, but non-limiting embodiment of the present invention is described in relation to the following set of drawings.

Figure 1 shows a schematic representation of an elemental two-cell mini fuel cell battery module as seen from one of its faces.

Figure 2 shows a schematic representation of an elemental two-cell mini fuel cell battery module as seen in lateral view (along direction A in Figure 1).

Figure 3 shows a schematic representation of a current collector.

Figure 4 shows a schematic representation of the exploded view of the elemental two-cell fuel cell battery module.

Figure 5 shows schematically some of the existing possibilities for combining two-cell fuel cell battery modules in order to configure mini fuel cell batteries with 4 individual cells (Figure 5a), 6 individual cells (Figure 5b and Figure 5c) or 10 individual cells (Figure 5d).

Figure 6 shows a polarization curve obtained experimentally with a two-cell fuel cell battery module similar to that schematized in Figure 1, using in this case hydrogen as the fuel and oxygen as the oxidant air.

### DESCRIPTION OF A PREFERRED EMBODIMENT

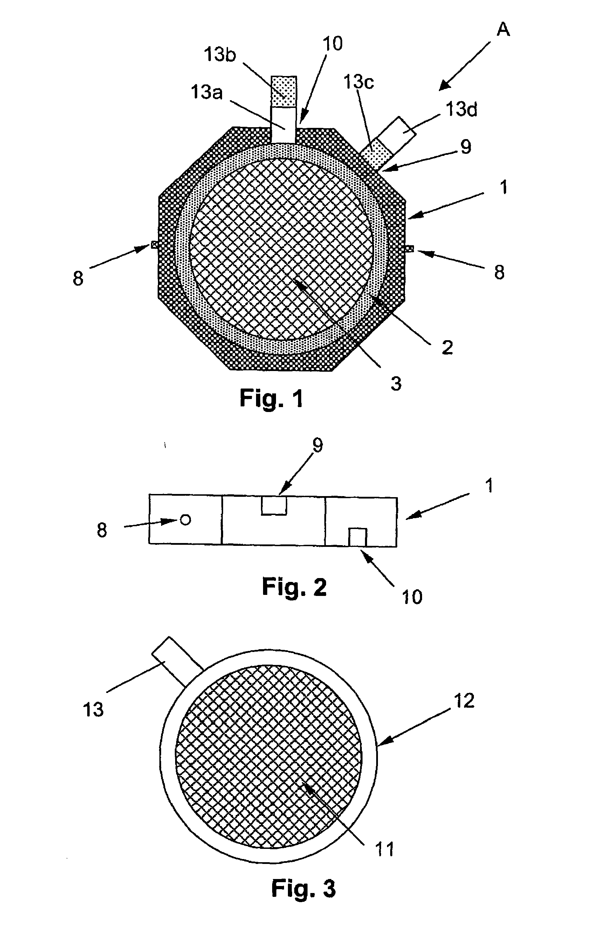

The elemental module, the drawing of which is shown schematically in Figure 1, consists of two individual cells, one in view at its front face, and the other, in the rear face, which is symmetrical with respect to the former, and cannot be seen from the viewpoint of the reader. Each elemental cell comprises a unit or set formed by a membrane electrode assembly (MEA), its anodic collector and its cathodic collector. The elemental module consists of a central body 1 onto which both individual cells are secured.

In this embodiment the octagonal shape of the central body 1 has a purely illustrative value, for the purpose of facilitating the interpretation of the drawings, and the body 1 can have any other geometric shape according to any particular requirement.

The following description relates to one individual cell which is on view, on the understanding that at the rear, which is not on view, there is another similar individual cell.

Each individual cell is secured to the body 1 by means of a closure ring 2, which is screwed onto the body 1. The closure ring 2 leaves exposed to the air the corresponding cathodic collector 3, which includes a plurality of pores, apertures, perforations or holes, which are represented schematically in Figure 1 by means of a grid, thus permitting the passage of oxygen from the air to the cathodic collector 3.

The flanges 13a, 13b, 13c, 13d represent tabs of the electrical collectors 3, 4, by means of which the electrical connections of the mini battery can be formed. In relation to the front individual cell, the tab 13a corresponds to the cathodic collector 3 and the tab 13b corresponds to the anodic collector 4. In relation to the rear individual cell, the tab 13c corresponds to the cathodic collector 3, and the tab 13d corresponds to the anodic collector 4. Thus, if it is wished to connect in series both individual cells of the two-cell module, it is possible, for example, to connect the tabs 13b, 13c, leaving tabs 13a, 13d as the positive and negative terminals, respectively.

There exist other alternatives to the use of tabs such as those described for the electrical connection between the electrical collectors 3, 4, the tabs described being one of the possible options which exist for descriptive purposes.

In this embodiment the body 1 includes two connection ports 8, 8, in this embodiment as projections, for the fuel, such that one port 8 acts as an input and the other port 8 acts as an output, where the output port 8 can include an automatic venting valve. The connection ports 8, 8 also allow for the interconnection of a plurality of fuel cell modules.

In another embodiment the body 1 could include only a single, input connection port 8.

Figure 2 represents a lateral view of the central body 1, along direction A at 45° from the elevation of the central body 1 in Figure 1, and illustrates a fuel connection port 8 and two recesses 9, 10, which serve the purpose of accommodating respective ones of the tabs 13a, 13b, and the tabs 13c, 13d on the other side.

Figure 3 represents an electrical collector 3, 4 which includes a permeable central part 11 which coincides with an electrode surface of the battery, a dense peripheral part 12 which is non-permeable, that is, has no perforations or holes, for the purpose of maintaining a seal, and an electrical connection tab 13.

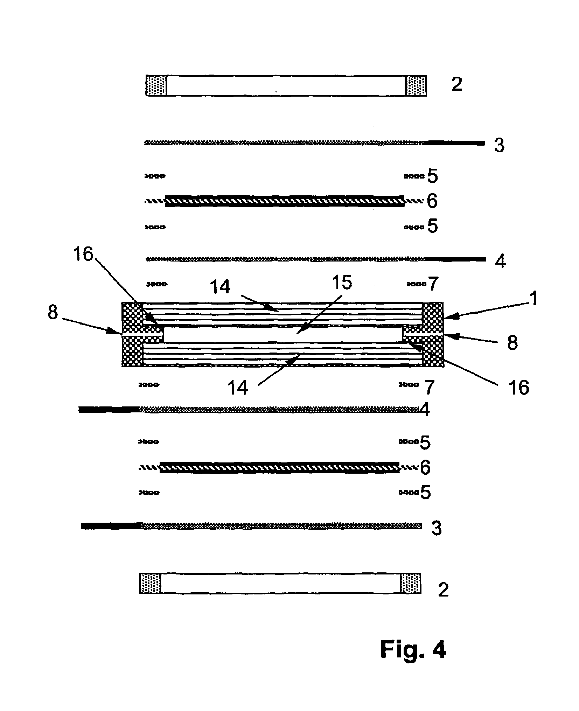

Figure 4 represents a cross-sectional, exploded view of a two-cell elemental module such as described in Figure 1, and illustrates the symmetrical arrangement of each of the elemental cells, one at the upper part, and the other at the lower part.

With this configuration, each of the closure rings 2 secures in position the following elements which constitute each of the elemental cells: a cathodic collector 3, an anodic collector 4, two seals 5, and an MEA 6. In this embodiment the elemental cells each include an additional sealing element 7 between the anodic collector 4 and the body 1.

In this embodiment the body 1 and the rings 2 each include screw threads 14, which provide for the screw fixing of each of the respective assemblies of the collectors 3, 4, the seals 5, 6, 7 and the MEA 6 to one of the opposite sides of the body 1.

Each of the assemblies is supported on an annular projection 16, which defines an anodic space 15 between the assemblies. The anodic space 15 can remain empty, or optionally can accommodate functional elements, such as turbulence promoters, which have particular application in relation to dissolved liquid fuels, de-humidification elements for the absorption of humidity, which have particular application in relation to gaseous fuels such as hydrogen, in order to retain excess condensation and enable release of this condensate to humidify the anodic space 15 during non-operational periods, thus avoiding the premature drying out of the electrolytic membranes.

In the embodiment of Figure 4, the fuel connection ports 8 are represented by channels in the body 1.

The above-described embodiment corresponds to a simple embodiment of the present invention, where comprising only two individual cells.

In practice, it may generally be desirable to employ a plurality of fuel cell modules, each with two or more fuel cell elements, which are connected in series, in order to obtain higher voltages.

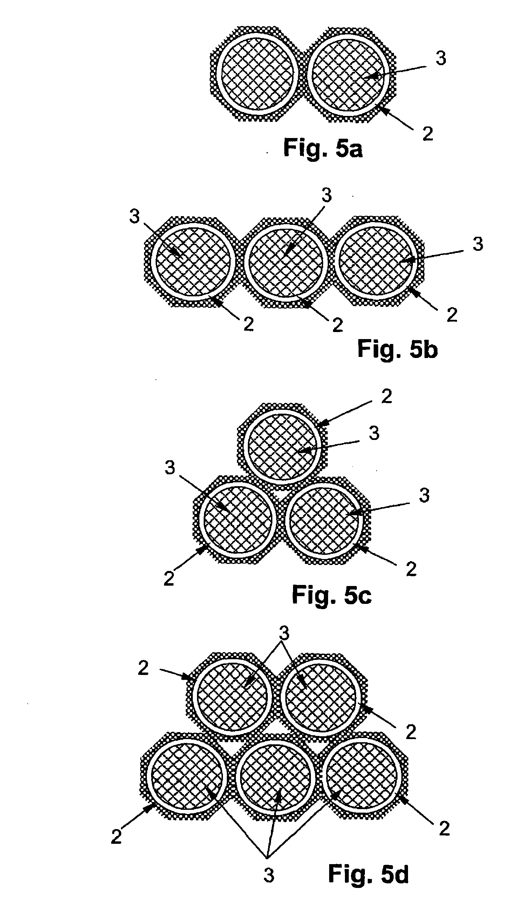

Figure 5 (a, b, c and d) shows schematically, purely for illustrative and non-restrictive purposes, some possible arrangements of the above-described two-cell modules.

Figure 5a represents a quadruple mini battery, that is, with four individual cells in total, two on each of the upper and lower sides.

Figures 5b and 5c show two configurations of a sextuple mini battery, that is, with six individual cells in total, three on each of the upper and lower sides.

Figure 5d represents a configuration of a dectuple mini battery, that is, with ten individual cells in total, five on each of the upper and lower sides.

It should be noted that such mini battery configurations do not necessarily have to be formed from discrete modules as embodied hereinabove, but instead can incorporate a monolithic, common central body 1 which accommodates a plurality of anodic compartments 15, which in turn are each delimited by two elemental cells, one at each side of the body 1, in the manner as represented in Figure 4.

The mini battery configurations of Figures 5a to 5d can have one or more fuel input connections and one or more fuel output connections, and in general there exist various options for the internal distribution of the fuel through internal channels or apertures provided in the central body 1, in the manner of the fuel connection ports 8, 8 in the embodiment of Figure 4, which comprise channels.

In other embodiments a plurality of the mini battery configurations of Figures 5a to 5d can be disposed in parallel, in order to achieve higher nominal voltages and obtain devices with greater power.

### Example 1

In order to demonstrate the concept, a two-cell fuel cell battery was constructed, that is, with two elemental cells, with an active electrode area of 5 cm². This fuel cell battery consisted of MEAs suitable for functioning with hydrogen as the fuel and air as the oxidant, in passive conditions, that is, without auxiliary elements for the heating, cooling, humidifying or forced impelling of the reagents, with the hydrogen accessing the anodic space 15 by means of a small excess pressure as regulated by a valve provided for this purpose in the fuel storage device outside of the anodic space 15, and air for natural convection.

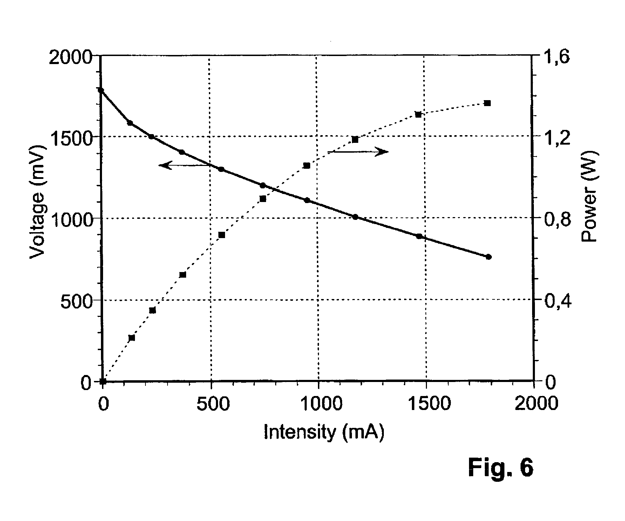

Figure 6 illustrates a characteristic polarization curve for this system, which, as can be seen, provides power of 1.1 W at 1.1 V and with a current of 1 A, the maximum power in practice being 1.4 W.

### Example 2

The design of the two-cell module described has the advantage that it can easily be extrapolated to modules with a larger number of cells, in general of an even number, by means of the appended lateral arrangement of different two-cell modules. This arrangement can be established by means of discrete elemental two-cell modules, such that the output for the fuel not used in each module is connected to the input of the next, and with the appropriate electrical connections. However, in compact areas of the system, it is far more convenient to have all of the two-cell modules in a monolithic common central body 1, with as many anodic compartments 15 as there are two-cell modules, connected to one another by a passage or channel in order to permit the correct distribution of the fuel.

Thus, it is relatively simple to design and construct modules with two, four, six, eight or more unit cells, giving rise to typical total nominal voltages, if all the cells are connected in series, of 1.2 V, 2.4 V, 3.6 V and 4.8 V, respectively.

The electrical current generated will depend on various parameters, such as the nature and the content of the electro-catalysts in the electrodes, the nature and state of the electrolytic membranes, the operating voltage, etc, but especially on the active electrode area.

For the purpose of illustration, taking into consideration typical performance levels of 150 mA/cm² at 0.6 V for a passive fuel cell battery supplied with dry hydrogen, and an active electrode area of 7 cm², as defined by a circular electrode with a diameter of 3 cm, the following nominal performance levels are obtained for modules having 2, 4, 6 and 8 unit cells:

| Number of Cells per Module | Nominal Voltage (relating to 0.6 V per Cell) | Nominal Current (for 7 cm² of Active Electrode Area) | Approximate Nominal Power |
|---|---|---|---|
| 2 | 1.2 V | 1050 mA | 1.3 W |
| 4 | 2.4 V | 1050 mA | 2.5 W |
| 6 | 3.6 V | 1050 mA | 3.8 W |
| 8 | 4.8 V | 1050 mA | 5.0 W |

The combination, in a common system, of several of these modules connected electrically in series, and with a fuel supply which is preferably in parallel in order to avoid excessive accumulation of water in the final anodic compartments 15 of the series, will lead to total power levels and voltages which are a multiple of the number of modules as so described.

Thus, for example, the combination in a common system of four modules with eight individual cells as described will lead to a generator for a nominal 20 W and 19.2 V. The purpose of this guideline data is to illustrate the versatility and flexibility of the present invention, which, in relation to the described embodiments, makes it possible to obtain power levels in the range of between about 1 and about 30 W.

## Claims

1. A mini fuel cell battery comprising at least one battery module, each battery module comprising:
a body unit (1); and
at least two fuel cell units which are disposed to the body unit (1) and
define an anodic space (15) therebetween, wherein each fuel cell unit comprises a pair of collectors (3, 4), a membrane electrode assembly (6) which is disposed between the pair of collectors (3, 4), and a fixing ring (2) which is secured to the body unit (1) by means of a screw-closure system, such as hermetically to seal the respective fuel cell unit to the body unit (1).

2. The battery of claim 1, wherein the fixing ring (2) is secured to the body unit (1) by means of inter-engaging screw threads.

3. The battery of claim 1, wherein the fixing ring (2) is secured to the body unit (1) by means of inclined inter-engaging flanges.

4. The battery of any of claims 1 to 3, wherein the fuel cell units are disposed to opposite sides of the body unit (1).

5. The battery of any of claims 1 to 3, wherein the fuel cell units are disposed only to one side of the body unit (1).

6. The battery of any of claims 1 to 5, where operative with hydrogen, as either pure or reformed hydrogen, and air.

7. The battery of any of claims 1 to 5, where operative with methanol, as an aqueous solution, and air.

8. The battery of any of claims 1 to 5, where operative with an oxygenated liquid fuel, such as an alcohol, preferably ethanol, 1-propanol, 2-propanol, ethylene glycol, glycerin, and a compound with a higher level of oxidation, such as an ether, preferably dimethyl ether, dimethoxymethane or trimethoxymethane, an aldehyde, preferably formaldehyde or glyoxal, or an acid, preferably formic acid or acetic acid.

9. The battery of any of claims 1 to 5, where operative with a non-oxygenated fuel, such as a chemical hydride, preferably of sodium tetrahydroborate type (NaBH₄), in an alkaline solution.

10. The battery of any of claims 1 to 9, wherein each battery module comprises more than two fuel cell units in an even number, preferably at least four fuel cell units, and more preferably from four to twenty fuel cell units.

11. The battery of any of claims 1 to 10, comprising a single battery module, and wherein the body unit (1) comprises a single, integral monolithic member.

12. The battery of any of claims 1 to 10, comprising a plurality of interconnected battery modules, preferably juxtaposed in a flat configuration.

13. A fuel cell system, comprising a plurality, preferably from 2 to 100, of the batteries of any of claims 1 to 12 where arranged in parallel relation, preferably such as to allow for access of air to the cathodic collectors (3) of each of the fuel cell units, either by spontaneous diffusion or forced ventilation.

14. A mini fuel cell battery with a screw-type closure system, comprising two sets of electrodes/electrolytic membranes/electrodes (MEAs) situated respectively at both sides of a central body, delimiting an anodic space in the centre, and the MEAs together with their corresponding electrical collectors being secured in position by means of two rings, which, by means of a screwing procedure, ensure that the assembly is completely hermetic.
